# EUROPEAN PATENT SPECIFICATION

(11) **EP 3 177 457 B1**
(45) Date of publication and mention of the grant of the patent: **12.09.2018**
(21) Application number: 15754019.6
(22) Date of filing: 20.07.2015
(51) Int. Cl.: B29D 30/46, B26D 3/00, B26D 7/01, B26D 1/06, B26D 5/02, B26D 7/02

(54) **APPARATUS AND PROCESS FOR BUILDING TYRES FOR VEHICLE WHEELS**
VORRICHTUNG UND VERFAHREN ZUR HERSTELLUNG VON REIFEN FÜR FAHRZEUGRÄDER
APPAREIL ET PROCÉDÉ POUR LA FABRICATION DE PNEUS POUR DES ROUES DE VÉHICULES

(30) Priority: 05.08.2014 IT MI20141432
(43) Date of publication of application: 14.06.2017
(73) Proprietor: Pirelli Tyre S.p.A., 20126 Milano (IT)
(72) Inventor: SACCHI, Sergio, 23900 Lecco (IT)
(74) Representative: Inchingalo, Simona
(86) International application number: PCT/IB2015/055488
(87) International publication number: WO 2016/020781

(56) References cited:
- EP-A1- 2 431 164
- EP-A1- 2 633 988
- EP-A2- 0 125 148
- FR-A1- 2 992 253

## Description

The present invention relates to an apparatus and a process for building tyres for vehicle wheels.

More particularly, the invention is aimed for a process and the equipment usable also for building a tyre, preferably with high curvature, to be subsequently subjected to a vulcanisation cycle for obtaining the final product.

By "tyre with high curvature" it is intended in particular a tyre for vehicles with two wheels.

By "tyre for vehicles with two wheels", in particular motorcycles, it is intended a tyre whose curvature ratio is approximately comprised between about 0.15 and about 0.45.

By "curvature ratio" relative to a tyre (or to a portion thereof) it is intended the ratio between the distance of the radially outer point of the tread band (or of the outer surface) from the line passing through the laterally opposite ends of the tread itself (or of the outer surface itself), measured on a radial plane of the tyre (or of said portion thereof), and the distance measured along the cord of the tyre (or a portion thereof) between said ends.

A tyre for vehicle wheels generally comprises a carcass structure comprising at least one carcass ply having respectively opposite ends engaged with respective annular anchoring structures, integrated in the zones normally identified with the name "beads", having an inner diameter substantially corresponding with a "fitting diameter" of the tyre on a respective mounting rim.

The carcass structure is associated with a belt structure which can comprise one or more belt layers, radially superimposed with respect to each other and with respect to the carcass ply, having textile or metal reinforcement cords with crossed and/or substantially parallel orientation with respect to the circumferential extension direction of the tyre (at 0 degrees). In a radially external position with respect to the belt structure, a tread band is applied, it too made of elastomeric material like other semi-finished products constituting the tyre.

After the building of the green tyre actuated by assembly of respective components, a treatment of moulding and vulcanisation is generally executed that is aimed to determine the structural stabilisation of the tyre via cross-linking of the elastomeric compositions as well as impart on the same, if requested, a desired tread pattern and possible distinctive graphic marks at the sidewalls of the tyre.

In order to obtain the carcass plies or other annular components of the tyre, such as for example the belt layers, a semi-finished product in continuous strip form is cut to size in order to obtain one or more sections thereof in strip form. The strip sections are wound around the circumferential extension of a forming drum. Multiple sections are separately wound, one radially superimposed on the preceding, if provision is made for applying multiple plies or layers.

The continuous semi-finished product, from which the strip sections are obtained, is attained by joining, at the respective opposite ends, sections sequentially cut from a primary manufactured item comprising cords parallel to the longitudinal extension thereof, at least partially incorporated in an elastomeric matrix and coplanar adjacent to each other. The cutting angle along which the primary manufactured item sections are obtained determines the orientation of the single cords with respect to the longitudinal extension direction of the obtained continuous semi-finished product, and consequently with respect to the circumferential extension direction of the obtained tyre. Document EP 2 431 164 relates to a device and the related method for producing a tire comprising a long tire constituting member sequentially sliding and transferring on a first and second transfer conveyers. The entire constituting member is cut into length and then placed on the second transfer conveyer. The cutting means includes a fixed anvil provided between the first and second transfer conveyers, and a cutter, placed above the anvil, which is movable vertically by a piston-cylinder mechanism. The anvil supports the constituting member during the cutting action. The cutter approaches and separates from the anvil from above and makes contact with the tire constituting member and cuts it into a predetermined shape. The cutting means moves the piston-cylinder mechanism either linearly in the width direction of the constituting member or obliquely at a predetermined angle.

Holding attaching means are also provided in order to promote the translation of the cut constituting member along the second transfer conveyer, through the action of suction means.

Document EP 2 633 988 relates to a specific method for cutting to length the tyre component, comprising the steps of conveying the tyre component to be cut to length to a cutting device positioned under a cutting bar presenting a cutting groove (9). The tyre component is pressed against the cutting bar by fixing means and eventually by clamping segments which are pressed against the tyre component from below. The covered vacuum cavities are used for fixing the tyre component against the cutting bar with high suction force and substantially without pressure losses. A cutting blade is guided along the cutting bar at a substantially constant rate and the tyre component thereby being severed along a straight cutting plane.

Document FR 2 992 253 relates to a device for cutting and transferring a profile strip from a means for collecting and lengthening a strip section in a continuous strip, until the complete deposition of this strip section on a receiving surface which is generally rotative. This device comprises a cutting means, comprising a cutting blade, capable of separating said section from the continuous strip along a cutting line, a telescopic transfer belt, disposed along a longitudinal direction between the cutting means and the receiving surface, and intended to receive the strip section by its first face, a first half-anvil, disposed upstream of the cutting line, and provided with holding means capable of grasping the strip by its first face, a conveyor, provided with holding means capable of grasping the leading edge of the strip section by a second face, said conveyor being driven in translation along the longitudinal direction. There is also a second half-anvil intended to collaborate with the first half-anvil, disposed downstream of the cutting line and upstream of the transfer belt, including holding means capable of grasping the trailing edge of the strip section by said first face, and driven in translation along the longitudinal direction. The second half-anvil is movable between a position wherein the two half-anvils are in contact with each other, and a position wherein it adjoins the upstream portion of the telescopic transfer belt in the retracted position.

The document EP 0125147 or EP 0125148 illustrate an apparatus for the transverse cutting of a continuous semi-finished product, in order to obtain one or more belt layers. The semi-finished product is made to longitudinally advance by a drive arm provided with a suction system, which grasps a head end of the continuous semi-finished product in order to transfer it onto a building drum. The semi-finished product is partially wound around the building drum, by an angular rotation of the latter around the axis thereof, after the semi-finished product is transversely cut along a direction parallel to the orientation of the cords. The cutting action is executed by a blade which perpendicularly penetrates in the semi-finished product and translates transversely thereto, in one of the sections thereof upstream of the building drum. A pair of support plates supports the section of semi-finished product subjected to the action of the blade, respectively upstream and downstream of the cutting line. During the cutting action, the blade translates along a slit defined between the support plates. The plates can be oriented in a manner such that the orientation of the slit, to which the blade translation direction corresponds, corresponds to a nominal orientation direction of the cords.

Upon executed cutting, the drive arm engages the tail end of the strip section separated from the continuous semi-finished product, in order to accompany it for the purposes of completing the application on the drum, simultaneously with a new rotation of the building drum.

The drive arm is then deposited on the new head end of the continuous semi-finished product generated in the cutting zone, in order to give rise to a new work cycle.

The Applicant has observed that it is advantageous to arrange systems that are capable of allowing the production of tyres even in small batches having different design characteristics and sizes.

In particular, in the field of production of tyres with high transverse curvature, e.g. for motor vehicles with high and very high performances, the Applicant has for such purpose observed that the use of carcass plies can be for example required in which the orientation of the cords with respect to the extension circumferential direction varies significantly according to the type of use and/or behaviour characteristics required. For example, the angle formed by the cords can be comprised between a maximum value of about 90°, used in the attainment of tyres with carcass structure of radial type, and a minimum value of about 55°- 60°, typically used in tyres with carcass structure with two or more plies whose cords have respectively crossed orientations.

Also the orientation of the cords in the belt layers can vary significantly, e.g. in a field of values comprised between about 20° and about 40°.

The Applicant deems that in order to be able to execute the cutting of semi-finished products having cords oriented according to angles different from time to time, it is advantageous to arrange solutions that allow modifying the orientation of the cutting line along which the blade is moved, in accordance with the orientation of the cords present in the semi-finished product.

The Applicant nevertheless observed that the systems of the type illustrated in EP0125147 are poorly adapted to meeting the needs of operative flexibility required in modern production plants.

The Applicant has also observed that the presence of the support plates, operating below the semi-finished product itself in order to support it and to suitably support the action exerted by the blade, is incompatible with the need to modify the orientation of the cutting line, without having to also modify the orientation of the support plates and the groove defined therebetween.

According to the Applicant, arranging support plates that can be oriented in accordance with the direction of movement of the blade nevertheless involves considerable structural complication of the apparatus, requiring the use of support plates having considerable size also along the longitudinal extension of the semi-finished product, and finally the substitution of the support plates requires a set-up time that is non-negligible.

The Applicant has also verified that the use of support plates of large size, especially along the longitudinal extension of the semi-finished product, can make difficult the sliding of the cut semi-finished product on the plates, without auxiliary grip devices such as the drive arm required in EP 125147, which cause further structural complications of the apparatus.

The Applicant has therefore perceived that by supporting the semi-finished product, by operating on the free or upper surface thereof, i.e. on the surface unsupported by plates or other support elements/devices, it would have been possible to overcome the above-illustrated drawbacks.

The Applicant has finally found that by supporting the semi-finished product along the cutting line by a grip action from above, i.e. exerted on the upper surface of the semi-finished product itself rather than with the aid of support plates or planes operating below the semi-finished product, it is possible to achieve significant improvements in terms of structural simplification in the apparatus, operative flexibility and processing precision.

In particular, according to a first aspect, the present invention relates to a process for building tyres for vehicle wheels in accordance with claim 1. Provision is made for arranging at least one semi-finished product comprising cords parallel to each other. Provision is made for cutting said semi-finished product along a cutting line parallel to the extension of the cords in order to obtain a strip section. Provision is made for circumferentially winding the strip section on a forming drum. The action of cutting comprises positioning said semi-finished product below at least one blade. The action of cutting comprises supporting the semi-finished product by a grip action applied on an upper surface of the semi-finished product. The action of cutting comprises translating the at least one blade along the cutting line, through the semi-finished product supported by said grip action.

The Applicant deems that the grip action exerted from above represents an optimal solution for the purpose of obtaining a suitable support of the semi-finished product during the execution of the cutting. Indeed, the need for additional support members, operating in the cutting zone for supporting the semi-finished product during the execution thereof, is eliminated. More precisely, due to the grip action exerted from above, the semi-finished product is adapted to be suitably supported during the execution of the cutting, being maintained coplanar with the advancing direction thereof, so as to not undergo any stress which can cause undesired deformations thereof, including localised thinning and/or thickening of the cords. In addition, the absence of additional support members operating against the semi-finished product below the same facilitates the movement of the blade through the semi-finished product. In particular, the blade can freely translate through the semi-finished product without the risk of impacting obstacles. In particular a suitable distance can be left between the inlet and outlet feeders of the semi-finished product in the cutting zone, such to allow the passage of the blade also along different angles that are significantly different from each other. With simple setting operations, it is thus possible to adapt a same apparatus to the processing of plies suitable, for example, both to tyres of radial type, in which the cords are oriented perpendicular to the longitudinal extension of the semi-finished product, and to tyres with crossed plies, in which the cords of each ply have a significant angle, with respect to a direction perpendicular to the circumferential extension.

In a further aspect, the invention relates to an apparatus for building tyres for vehicle wheels in accordance with claim 7. Supply devices are provided for arranging, along an advancement plane, a semi-finished product comprising cords parallel to each other. At least one cutting unit is provided for cutting said semi-finished product, so as to obtain a strip section. A unit is provided for depositing said strip section, placed downstream of said cutting unit in order to wind said strip section on a forming drum. Said cutting unit comprises at least one retention group that exerts a grip action on an upper surface of the semi-finished product in order to support and retain said semi-finished product. Said cutting unit comprises at least one blade active through said semi-finished product, supported by said retention group, along a cutting line parallel to the extension of the cords.

In at least one of the aforesaid aspects, the invention comprises one or more of the following preferred characteristics.

Preferably, the grip action is only exerted on the upper surface of the semi-finished product.

Preferably the semi-finished product is transversely cut by said at least one blade.

Preferably, provision is made for respectively joining opposite ends of the strip section circumferentially wound, in order to define an annular component of said tyre. The semi-finished product is positioned below the at least one blade with a lower surface of the semi-finished product in abutment relation on at least one slide plate arranged in an operative position.

The slide plate is therefore adapted to support the semi-finished product during the penetration of the blade(s).

Preferably, provision is made for advancing said semi-finished product along an advancement plane that is arranged below said at least one blade. The slide plate in an operative position is coplanar with the advancement plane.

The slide plate is therefore adapted to support and accompany one end of the cut semi-finished product, during the translation thereof along the advancement plane. Provision is made for moving said slide plate away from the semi-finished product after the activation of the grip action.

Undesired mechanical interference of the blade(s) with the slide plate, independent of the movement direction of the blade(s) during the execution of the cutting, is thus eliminated. Moving the slide plate away from the semi-finished product is actuated by translating the slide plate from an operative position in which it is coplanar with the advancement plane to a rest position in which it is arranged below the advancement plane. The translation of the at least one blade along the cutting direction is actuated after moving the slide plate away from the semi-finished product.

Preferably, provision is made for lowering the at least one blade through said semi-finished product before translating said at least one blade along the cutting line.

Preferably, moving the slide plate away from the semi-finished product is actuated after the lowering of said at least one blade.

The support action exerted by the slide plate on the semi-finished product facilitates an effective penetration of the blade through the semi-finished product itself for the purpose of the execution of the cutting, opposing undesired formations thereof that are due to the thrust action exerted by the blade.

Preferably, during the translation of said at least one blade along the cutting line the semi-finished product is supported coplanar to the advancement plane.

In this manner, localised permanent elongations and/or other undesired deformations of the semi-finished product are avoided during the execution of the cutting.

Preferably, provision is made for rotating the at least one blade around a substantially vertical axis in order to arrange said at least one blade parallel to the extension direction of the cords composing the semi-finished product.

Thus a correct execution of the cutting is ensured without risking cutting or damaging cords adjacent to the cutting line

Preferably, following the rotation, said at least one blade is oriented according to an angle comprised between about 60° and about 90°, with respect to an advancing direction of the semi-finished product along the advancement plane.

It is thus possible to increase operative flexibility. The execution of the cutting can in fact be executed on semi-finished products having cords with different tilt angles with respect to the longitudinal extension, in order to meet design needs of different tyres.

Preferably, the grip action is actuated by achieving a suction action on said semi-finished product.

Preferably, said suction action is executed through suction nozzles distributed along the cutting line.

An effective grip action is thus ensured, without the risk of damaging the semi-finished product.

Preferably, at least one part of the suction nozzles situated beyond lateral edges of the semi-finished product are selectively disabled during the retention of the semi-finished product.

Preferably, during the retention action, at least one part of the suction nozzles situated beyond lateral edges of the semi-finished product are selectively disabled.

Preferably, provision is also made for modulating the quantity of deactivated nozzles as a function of the length of the cutting line on the semi-finished product.

It is thus possible to obtain a satisfactory grip action even when the transverse size of the semi-finished product is relatively limited.

Preferably, after the cutting action, the slide plate is translated from the rest position to the operative position and the grip action has stopped.

Preferably, after the stopping of the grip action, the cut strip is made to advance along the advancement plane away from said at least one blade and the semi-finished product is made to advance along the advancement plane and is situated below said at least one blade for the execution of a new cutting action.

Preferably, a pair of blades simultaneously translate from a central zone towards lateral edges of the semi-finished product during the execution of the cutting.

Thus, a mutual compensation of the forces exerted on the semi-finished product by the blades during the execution of the cutting is attained, in addition to a reduction of the work times.

Preferably, during the cutting action, the semi-finished product is maintained coplanar with an advancement plane of said semi-finished product.

Preferably, the semi-finished product is perforated by said at least one blade before translating said at least one blade along the cutting line.

The Applicant deems that a perforation of the semi-finished product by the blade(s) facilitates a reliable and precise execution of the cutting between contiguous cords without jamming the blade(s) and/or damaging the cords.

Preferably, during the perforation the semi-finished product lies in abutment relation on at least one slide plate. Said slide plate is moved away from the semi-finished product after the activation of the grip action.

Preferably, the retention group operates without contacts between the retention group itself and the lower surface and/or other parts of the semi-finished product. A slide plate is adapted to support said semi-finished product in abutment relation, in an operative position before the actuation of said at least one blade.

Preferably, said advancement plane is arranged below said cutting unit. Said slide plate is movable between an operative position, in which it is in contact with and supports said semi-finished product, and a rest position, in which it is moved away from said semi-finished product. The slide plate has a work surface coplanar with the advancement plane in said operative position, and arranged below the advancement plane in said rest position.

Preferably, the cutting unit also comprises a support and movement structure for said at least one blade, placed above the advancement plane.

Preferably, said support and movement structure is movable towards the advancement plane.

Preferably, the support and movement structure can be oriented around an axis perpendicular to the advancement plane.

Preferably, said at least one blade is movable along a substantially vertical direction between a deactivation position in which it is lifted from the semi-finished product and distant therefrom, and an activation position in which it is lowered with an end thereof below the advancement plane of the semi-finished product, after having traversed it.

Preferably, said slide plate has a recess aligned with said at least one blade along a direction perpendicular to the advancement plane. Preferably, said recess has lobed configuration.

Preferably, the recess has a perimeter profile extended along a closed line, comprising two round lobes respectively opposite and mutually connected at a central narrowing.

Preferably, said recess is sized according to a width greater than a maximum transverse size of one end of said at least one blade housed in the recess itself in the activation position.

Preferably, said recess is sized according to a width less than 110% of a maximum transverse size of one end of said at least one blade housed in the recess thereof in the activation position.

The support action exerted by the slide plate on the semi-finished product, during the perforation thereof by the blade, is thus optimised.

Preferably, the at least one blade is rotatable around an axis substantially perpendicular to the advancement plane, in order to arrange said at least one blade parallel to the cords composing the semi-finished product.

Preferably, said at least one blade can be oriented along an angle comprised between about 60° and about 90°, with respect to an advancing direction of the semi-finished product along the advancement plane.

Preferably, said retention group functions with pneumatic action.

Preferably, said retention group comprises suction devices.

Preferably, said retention group comprises at least one grip plate positionable on the upper surface of the semi-finished product.

Preferably, said retention group comprises suction nozzles distributed along at least one direction parallel and adjacent to the cutting line.

Preferably, at least two arrays of suction nozzles are provided, parallel and side-by-side to each other respectively on opposite sides in relation to the cutting line.

Preferably, the suction nozzles belong to at least one common suction duct.

Preferably, deactivation devices active on at least one part of the suction nozzles are provided in order to interrupt a fluid communication between the nozzles themselves and the common suction duct.

Preferably, said deactivation devices operate on suction nozzles arranged in proximity of respectively opposite ends of at least one grip plate carrying the suction nozzles.

Preferably, the deactivation devices comprise interception valves each operating on at least one respective nozzle and selectively activatable for modulating the quantity of deactivated nozzles as a function of the length of the cutting line on the semi-finished product.

Preferably said suction nozzles are operatively carried by the support and movement structure.

The alignment direction of the nozzles therefore follows the orientation imparted to the support and movement structure, as a function of the extension direction of the cords of the semi-finished product being processed.

Preferably, a pair of blades, simultaneously perforating the semi-finished product, are movable along the cutting line in opposite senses from each other for cutting the semi-finished product from a central zone towards lateral edges of the semi-finished product.

Preferably, said at least one blade is movable in a direction parallel to the advancement plane, driven by a movement system, between a perforation position in which it hits and crosses through the semi-finished product, and an end-of-cutting position in which it is situated horizontally spaced from the perforation position.

Preferably, the advancing devices comprise an inlet feeder and an outlet feeder that are respectively aligned, between which the cutting unit operates.

Preferably, the slide plate is operatively interposed between an inlet feeder and an outlet feeder.

Further characteristics and advantages will be clearer from the detailed description of a preferred but not exclusive embodiment of a process and an apparatus for building tyres for vehicle wheels, in accordance with the present invention.

Such description will be set forth hereinbelow with reference to the enclosed drawings, provided only as a non-limiting example, in which:
- figure 1 schematically shows, in interrupted perspective view, a building apparatus in accordance with the present invention, in an initial step of the work cycle;
- figure 2 shows the apparatus of figure 1 during the advancing of a semi-finished product in order to arrange it for the execution of the cutting;
- figure 3 shows the apparatus pursuant to the preceding figures, during the grip action on the semi-finished product;
- figure 4 shows the apparatus pursuant to the preceding figures, during the perforation of the semi-finished product by the blades;
- figure 5 shows the apparatus pursuant to the preceding figures, with lowered plate;
- figure 6 shows the apparatus pursuant to the preceding figures, at the end of executing the cutting;
- figure 7 schematically shows the apparatus in interrupted side view, during the moving away of a cut strip section and winding of the same on the forming drum;
- figure 8 shows in top view a structural detail of the slide plate;
- figure 9 shows in cross section a tyre obtainable by the present invention.

With reference to the abovementioned figures, reference number 1 overall indicates an apparatus for building tyres for vehicle wheels, arranged to actuate a process according to the present invention.

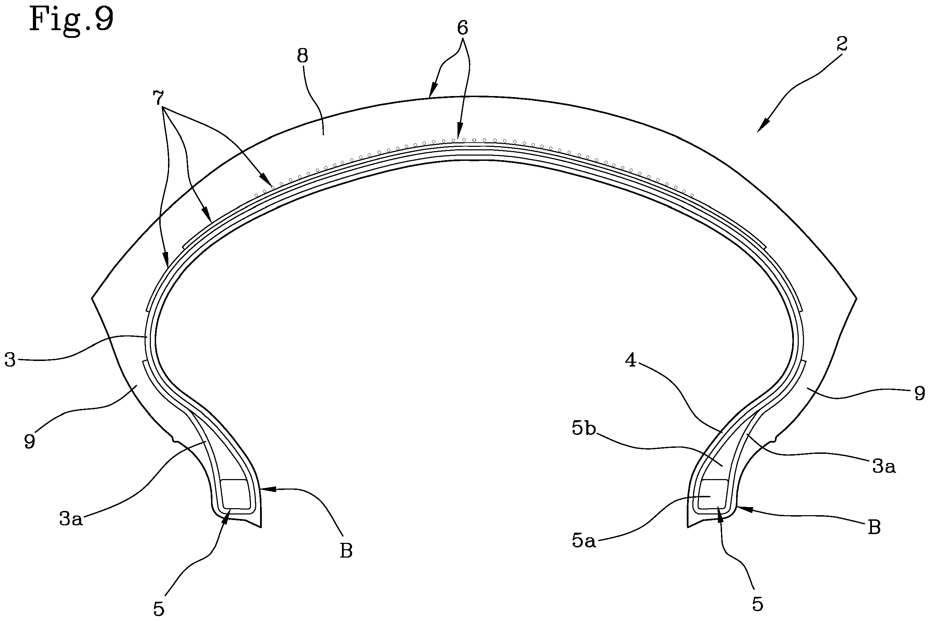

The apparatus 1 is set to obtain tyres 2 (figure 9) essentially comprising at least one carcass ply 3 preferably internally covered by an impermeable elastomeric material layer or so-called liner 4. Two annular anchoring structures 5, each comprising a so-called bead core 5a preferably carrying an elastomeric filler 5b in radially outer position, are engaged with respective terminal flaps 3a of the carcass ply/plies 3. The annular anchoring structures 5 are integrated in proximity of zones "B" normally identified with the name of "beads", at which the engagement occurs between the tyre 2 and the respective mounting rim (not depicted).

A crown structure 6 preferably comprising a tread band 8 circumferentially superimposed on one or more belt layers 7 is circumferentially applied around the carcass ply/plies 3.

Two sidewalls 9, each extended from the corresponding bead "B" to a corresponding lateral edge of the tread band 8, are applied in laterally opposite positions on the carcass ply/plies 3.

More particularly, the apparatus 1 is adapted to be used for sequentially cutting a semi-finished product 12, preferably in continuous strip form, along a direction that is transverse with respect to its longitudinal extension, so as to obtain strip sections 13 thereof. Each strip section 13 is adapted to be wound around the circumferential extension of a forming drum D, in order to obtain for example a carcass ply 3, a belt layer 7 or another annular component of the tyre during building. Multiple strip sections 13 can be separately wound, one radially superimposed on the preceding, if provision is made for applying multiple plies or layers.

The semi-finished product 12 from which the strip sections 13 are obtained is attained by joining, at respective opposite edges, sections sequentially cut from a primary manufactured product comprising cords parallel to the longitudinal extension thereof, at least partially incorporated in an elastomeric matrix and coplanar adjacent to each other. The cutting angle along which the sections are obtained from the primary manufactured product determines the orientation of the single cords with respect to the longitudinal extension direction of the obtained continuous semi-finished product, and consequently with respect to the extension circumferential direction of the obtained tyre.

In the obtainment of the carcass plies 3, provision can be made for the cords to be oriented according to an angle approximately comprised between about 90°, normally employable for obtaining tyres of radial type, and about 60° typically usable for example in obtaining two-ply tyres for motorcycles.

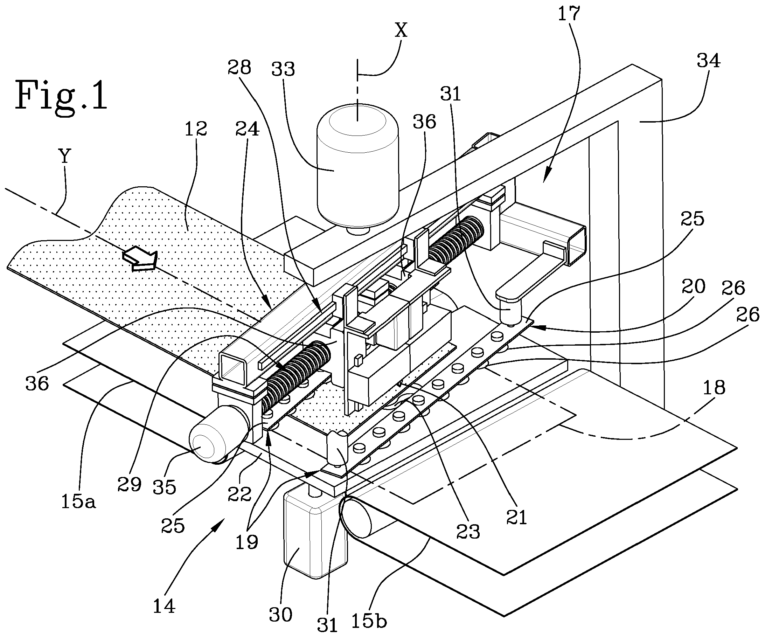

The apparatus 1 comprises a cutting station 14 (figure 1) at which, upon action of a cutting unit 17, the cutting of the semi-finished product 12 in strip sections 13 occurs for the obtainment of the carcass plies 3.

Downstream of the cutting unit 17, the building apparatus provides for a unit 16 for depositing each single strip section 13, for circumferentially winding each strip section 13 on the forming drum D.

The apparatus 1 also comprises supply devices 15 in order to arrange the semi-finished product 12, preferably the strip sections 13 obtained therefrom, along a geometric advancement plane 18.

Such supply devices 15 comprise, preferably, at least one inlet feeder and one outlet feeder that are respectively aligned, for example obtainable in conveyor belt form. The cutting unit 17 operates between the inlet and outlet feeder.

Preferably, the inlet and outlet feeder are arranged immediately upstream and downstream, respectively, of said cutting station 14. More precisely, a first conveyor belt 15a placed upstream is adapted to convey the semi-finished product 12 towards the cutting station 14, while a second conveyor belt 15b placed downstream is adapted to convey the strip sections 13 from the cutting station 14 towards an application unit 16.

The cutting unit 17 comprises at least one retention group 19 that exerts a grip action on an upper surface 12a of the semi-finished product 12. Said upper surface 12a is not in contact with the first conveyor belt 15a, the second conveyor belt 15b and a slide plate 22 illustrated hereinbelow.

More precisely, the grip action is preferably only exerted on the upper surface 12a of the semi-finished product 12. In other words, the retention group 19, set for supporting and retaining the semi-finished product 12 during the execution of the cutting, operates without contacts with the lower surface and/or other parts of the semi-finished product 12. Said lower surface is in contact with the first conveyor belt 15a, the second conveyor belt 15b and the slide plate 22.

The retention group 19 preferably functions with pneumatic action. It can for example comprise suction devices 20 that achieve the grip on the semi-finished product 12 via a suction action.

The cutting unit 17 also comprises at least one blade 21 active through the semi-finished product 12 which is supported by the retention group 19.

In a position below the cutting unit 17, in particular below the blade 21, the apparatus comprises at least one slide plate 22, adapted to support in abutment relation the semi-finished product 12 in an operative position.

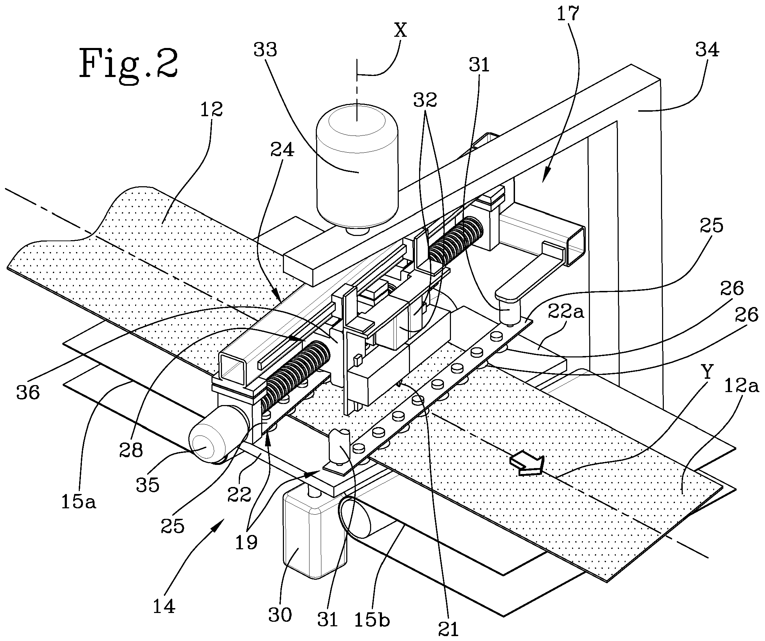

The slide plate 22 is operatively interposed between the inlet feeder 15a and the outlet feeder 15b (figure 2).

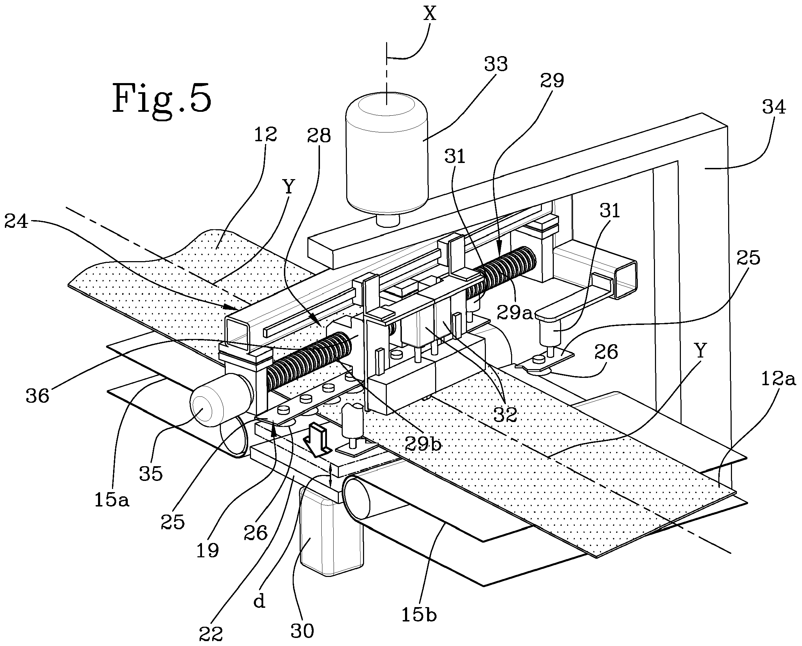

The semi-finished product 12 is adapted to be advanced from the abovementioned supply devices 15, in particular by the inlet feeder 15a, along the advancement plane 18, arranged below the cutting unit 17 (figure 1). In particular, the semi-finished product 12 is positioned at the cutting unit 17, below the blade 21, with its lower surface lying in abutment relation slidable on the abovementioned slide plate 22, arranged in its operative position, coplanar with the advancement plane 18. In such operative position, the slide plate 22 is in contact with and supports the semi-finished product 12. The slide plate 22 is also movable, for example by a first actuator 30, between the abovementioned operative position and a rest position. In the rest position, the slide plate 22 is situated spaced from the semi-finished product 12, below the same (figure 5).

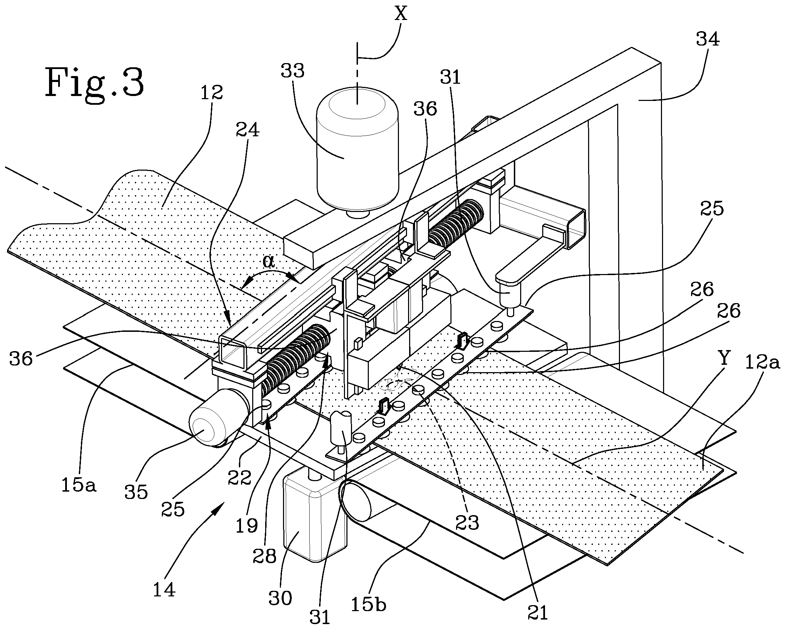

When the semi-finished product 12 is positioned below the blade 21, it is supported by the slide plate 22 and, immediately after, the retention group 19 comes into action exerting the grip action on the upper surface 12a of the semi-finished product itself (figure 3).

The slide plate 22 is then moved away from the semi-finished product, in particular from the lower surface 12b of the semi-finished product, and lowered by a distance "d" (figure 5) in order to be carried to a lower elevation with respect to the advancement plane 18 at the rest position thereof. More particularly, the slide plate 22 vertically translates between the operative position, in which it is coplanar with the advancement plane 18 and in contact with the semi-finished product 12 (figure 1), and the rest position in which it is below the advancement plane 18 and vertically moved away from the semi-finished product 12 (figure 5), travelling a height difference equal to the distance "d".

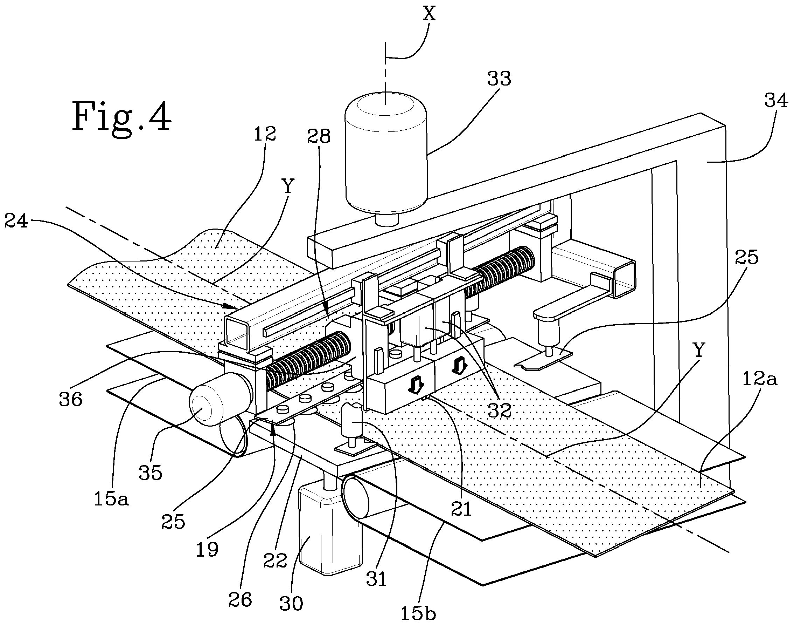

Before moving the slide plate 22 away from the semi-finished product 12, and after the activation of the grip action, the blade 21 is made to vertically translate, for example on command of at least one third actuator 32, in order to hit the semi-finished product 12 and cross through the thickness thereof (figure 4).

In order to receive the end of the blade 21, the slide plate 22 has preferably a recess 23 more visible in figure 1, vertically aligned with the blade 21, and extended along a horizontal direction perpendicular to the advancing of the blade 21. This recess 23 allows the blade 21 to effectively perforate the semi-finished product 12, without mechanical interference between the blade itself and the slide plate 22. Preferably, provision is made for a pair of blades 21 coplanar with each other, which simultaneously perforate the semi-finished product in a central zone thereof placed at the recess 23 of the slide plate 22.

The moving of the slide plate 22 away from the semi-finished product (figure 5) is actuated after the lowering of the blades 21.

After having perforated the semi-finished product 12 and having moved away the slide plate 22, each blade 21 is made to translate through the semi-finished product 12, along a cutting line T parallel to the extension direction of the cords which compose the manufactured product itself.

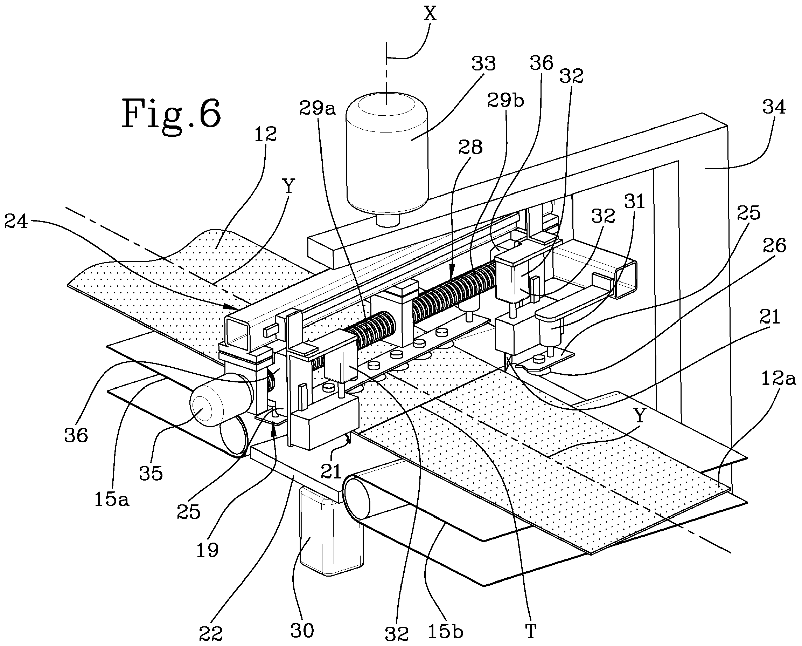

During the translation of the blades 21 along the cutting line T, the semi-finished product is constantly supported by the retention group 19 which maintains it coplanar with the advancement plane 18 (figure 6).

The cutting unit 17 comprises a support and movement structure 24 for the blades 21.

Such support and movement structure 24 can be movable from and towards the advancement plane 18, in order to translate each of the blades 21 along a substantially vertical direction between a deactivation position in which it is lifted from the semi-finished product 12 and distant therefrom, and an activation position in which it is lowered with one end thereof below the advancement plane 18 of the semi-finished product 12, after having traversed it. Alternatively, as provided in the illustrated example, the vertical movement of each blade can be entrusted to a respective third actuator 32, operating between the blade itself and the support and movement structure 24.

On command of a fourth actuator 33 carried by a fixed structure 34, the support and movement structure 24 can be oriented around a vertical axis X, or an axis that is in any case substantially perpendicular to the advancement plane 18.

The blades 21 can consequently be oriented around the axis X along an angle α approximately comprised between about 60° and about 90° with respect to an advancing direction Y of the semi-finished product along the advancement plane 18. In this manner, the blades 21 can be arranged parallel to the cords composing the semi-finished product 12 during the setting of the apparatus 1, before proceeding with the sequential cutting of the semi-finished product 12.

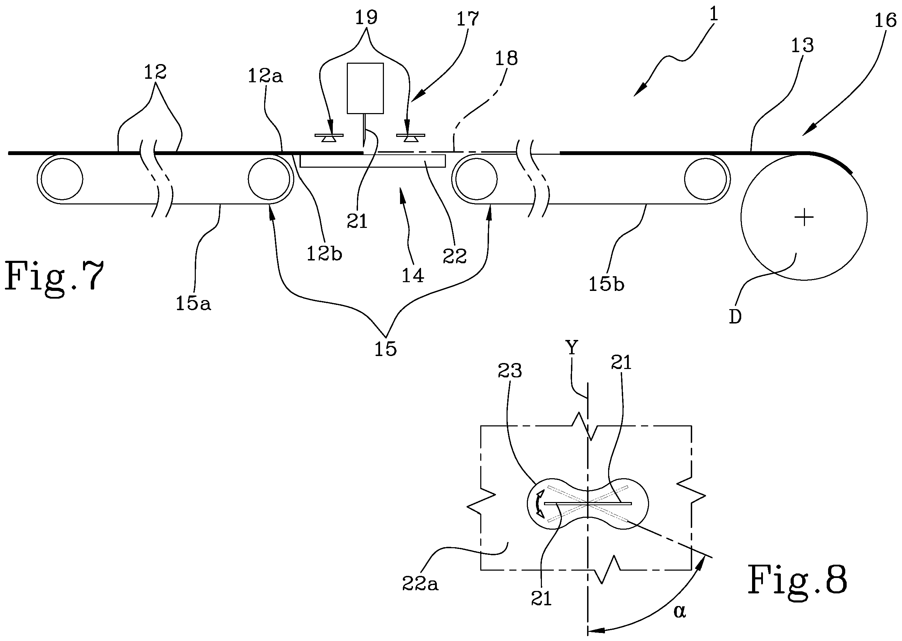

Preferably, in order to allow the possibility to orient the blades 21 around the axis X without causing mechanical interference with the plate 22 following the lowering of the blades themselves into the activation position, provision is made for the recess 23 to have a lobed configuration (figure 8). More particularly, the recess 23 can have, on the upper surface 22a of the slide plate 22, a perimeter profile extended along a closed line, comprising two round lobes respectively opposite and mutually connected at a central narrowing.

The recess 23 is advantageously sized according to a width greater than a maximum transverse size of the end of the blade 21 housed in the recess itself in the activation position.

Preferably, the recess 23 is sized according to a width less than 110% of a maximum transverse size of one end of the blade housed in the recess itself of the activation position. The upper surface 22a is therefore adapted to suitably support the semi-finished product 12, preventing excessive deformation thereof under the thrust exerted by the blade 21 during perforation.

If, as in the illustrated example, provision is made for using two or more blades 21, the "maximum transverse size of the end of the blade" is represented by the sum of the transverse sizes of the blades themselves.

The support and movement structure 24 is also connected to the retention group 19, with the relative grip plates 25 and the suction nozzles 26.

Therefore, also the entire retention group 19 can rotate around the axis X, together with the blades 21 and the support and movement structure 24.

After having cut the semi-finished product 12 in the central zone and along the desired angle, each blade 21 horizontally translates in a direction parallel to the advancement plane 18.

The translation is operated with a movement system 28. Such system 28 comprises at least one worm screw 29, supported by the support and movement structure 24 and drivable in rotation by a motor 35. In the illustrated example, the worm screw 29 has two threads 29a, 29b, respectively right hand thread and left hand thread, each operating on a respective trolley 36 slidably guided along the support and movement structure 24 and carrying one of the blades 21. The driving in rotation of the worm screw 29 therefore determines the movement of the blades 21 in opposite directions along the cutting direction parallel to the advancement plane 18. Therefore, during the execution of the cutting of the semi-finished product 12, the blades 21 simultaneously translate along a same cutting direction but in opposite directions, from a central zone towards the lateral edges of the semi-finished product itself.

More particularly, the blades 21 translate between a perforation position (figure 4) in which they hit and cross through the semi-finished product 12, and an end-of-cutting position, in which they are horizontally situated moving away from each other and spaced from the perforation position (figure 6).

During the entire cutting action, the semi-finished product 12 is constantly maintained in position, in the advancement plane 18, by the retention group 19.

The retention group 19 comprises at least one grip plate 25, comprising suction nozzles 26 distributed at least along a direction side-by-side and parallel to the cutting line T, and movable on command of second actuators 31 towards the semi-finished product 12 in order to reach the upper surface 12a of the latter and exert the grip action.

The suction action is executed through the suction nozzles 26.

Advantageously, at least two arrays of suction nozzles 26 are present, parallel and side-by-side to each other respectively on opposite sides of the cutting line T. Preferably, each array of nozzles is supported by a respective grip plate 25.

Only one of the arrays of nozzles 26 is represented in figures 4-6, for improved comprehension purposes.

Such suction nozzles 26 are in fluid communication with at least one suction duct, preferably common, which activates them if necessary.

The apparatus 1, and in particular the retention group 19, comprises deactivation devices, not illustrated, active at least on a part of the nozzles 26 in order to interrupt a fluid communication between the nozzles 26 themselves and the common suction duct.

The deactivation devices operate at least on the nozzles 26 closest to the respectively opposite ends of each of the grip plates 25.

The deactivation devices can for example comprise interception valves, each operating on at least one respective nozzle 26. Each single valve can be selectively activated in opening and closing. By the selective activation of the valves, it is possible to modulate the quantity of deactivated nozzles as a function of the length of the cutting line on the semi-finished product 12.

Preferably provision is made for at least one part of the suction nozzles 26, situated beyond the lateral edges of the semi-finished product 12, to be selectively deactivated during the retention of the semi-finished product by the retention group 19. Thus, the suction efficiency on the semi-finished product 12 is improved.

After the cutting action, the slide plate 22 is translated from the rest position to the operative position and the grip action is stopped.

The entire support and movement structure 24 is then once again lifted, vertically spacing the blades 21 and the grip plate 25 with the nozzles 26 from the semi-finished product 12 and hence from the advancement plane 18 (figure 7).

After the stopping of the grip action, the strip section 13 separated from the semi-finished product 12 is made to advance along the advancement plane 18 away from the blade 21, in order to be transferred onto the forming drum placed downstream of the outlet feeder 15b.

The forming drum D is driven in rotation simultaneously with the advancing of the strip section 13. Consequently the strip section 13 is circumferentially wound around the outer surface of the forming drum D, along its entire circumferential extension. Upon completed winding, the respectively opposite ends of the strip section 13 are mutually joined in order to complete the obtainment of a carcass ply 3 or another annular component of the tyre 2 during building.

After or during the moving of the strip section 13 away from the cutting station 14, the semi-finished product 12 can be made to advance along the advancement plane 18 and situated below the blade 21 for the execution of a new cutting action.

## Claims

1. Process for building tyres for vehicle wheels, comprising:
arranging at least one semi-finished product (12) comprising cords parallel to each other;
cutting said semi-finished product (12) along a cutting line (T) parallel to the extension of the cords in order to obtain a strip section (13);
circumferentially winding the strip section (13) on a forming drum (D);
wherein the action of cutting comprises:
positioning said semi-finished product (12) below at least one blade (21);
supporting the semi-finished product (12) by a grip action applied on an upper surface (12a) of the semi-finished product (12);
translating the at least one blade (21) along the cutting line (T), through the semi-finished product (12) supported by said grip action, wherein the semi-finished product (12) is positioned below the at least one blade (21) with a lower surface of the semi-finished product (12) in abutment relation on at least one slide plate (22) arranged in an operative position;
moving said slide plate (22) away from the semi-finished product (12), after the activation of the grip action and before the actuation of said at least one blade (21) along the cutting line (T), by translating the slide plate (22) from an operative position in which it is coplanar with the advancement plane (18) to a rest position in which it is arranged below the advancement plane (18).

2. Process as claimed in the preceding claim, comprising lowering the at least one blade (21) through said semi-finished product (12) before translating said at least one blade (21) along the cutting line (T).

3. Process as claimed in the preceding claim, wherein moving away of the slide plate (22) from the semi-finished product (12) is actuated after the lowering of said at least one blade (21).

4. Process as claimed in one or more of the preceding claims, comprising rotating the at least one blade (21) around a substantially vertical axis in order to arrange said at least one blade (21) parallel to the extension direction of the cords composing the semi-finished product (12).

5. Process as claimed in one or more of the preceding claims, wherein the grip action is actuated by achieving a suction action on said semi-finished product (12).

6. Process as claimed in the preceding claim, wherein said suction action is executed through suction nozzles (26) distributed along the cutting line (T); wherein at least one part of the suction nozzles (26) situated beyond lateral edges of the semi-finished product (12) being selectively disabled during the retention of the semi-finished product (12).

7. Apparatus for building tyres for vehicle wheels, comprising:
supply devices for arranging, along an advancement plane (18), a semi-finished product (12) comprising cords parallel to each other;
at least one cutting unit (17) for cutting said semi-finished product (12), so as to obtain a strip section (13);
a unit for depositing said strip section (13), placed downstream of said cutting unit (17) in order to wind said strip section (13) on a forming drum (D),
wherein said cutting unit (17) comprises:
at least one retention group (19) that exerts a grip action only on an upper surface (12a) of the semi-finished product (12) in order to support and retain said semi-finished product (12) during the cutting of said semi-finished product (12);
at least one blade (21) active through said semi-finished product (12), supported by said retention group (19), along a cutting line (T) parallel to the extension of the cords, wherein a slide plate (22) is adapted to support said semi-finished product (12) in abutment relation, in an operative position before the actuation of said at least one blade (21); said slide plate (22) being movable between an operative position, in which it is in contact with and supports said semi-finished product (12) and in which it has a work surface coplanar with the advancement plane (18), and a rest position, in which it is moved away from said semi-finished product (12) below the advancement plane (18); said slide plate (22) being configured to be movable to its rest position after the activation of the grip action and before the actuation of said at least one blade (21) along the cutting line (T).

8. Apparatus as claimed in the preceding claim, wherein the cutting unit (17) also comprises a support and movement structure (24) for said at least one blade (21), placed above the advancement plane (18); said movement structure (24) being movable towards the advancement plane (18).

9. Apparatus as claimed in one or more of the claims 7 to 8, wherein said slide plate (22) has a recess (23) aligned with said at least one blade (21) along a direction perpendicular to the advancement plane (18).

10. Apparatus as claimed in one or more of the claims 7 to 9, wherein the at least one blade (21) is rotatable around an axis substantially perpendicular to the advancement plane (18), in order to arrange said at least one blade (21) parallel to the cords composing the semi-finished product (12).

11. Apparatus as claimed in one or more of the claims 7 to 10, wherein said retention group (19) comprises suction devices.

12. Apparatus as claimed in one or more of the claims 7 to 11, wherein said retention group (19) comprises suction nozzles (26) distributed along at least one direction, parallel to and side-by-side the cutting line (T).

13. Apparatus as claimed in claim 7 or 12, comprising deactivation devices active on at least one part of the suction nozzles (26) in order to interrupt a fluid communication between the nozzles themselves and a common suction duct.

14. Apparatus as claimed in one or more of the claims 7 to 13, wherein said at least one blade (21) is movable in a direction parallel to the advancement plane (18), driven by a movement system (28), between a perforation position in which it hits and crosses through the semi-finished product (12), and an end-of-cutting position in which it is situated horizontally spaced from the perforation position.

15. Apparatus as claimed in one or more of the claims 7 to 14, wherein a pair of blades (21), simultaneously perforating the semi-finished product (12), are movable along the cutting line (T) in opposite senses from each other in order to cut the semi-finished product (12) from a central zone towards lateral edges of the semi-finished product (12).

## Patentansprüche

1. Verfahren zur Herstellung von Reifen für Fahrzeugräder, umfassend:
Anordnen zumindest eines halbfertigen Produkts (12) mit Korden, die parallel zueinander sind;
Abschneiden des halbfertigen Produkts (12) entlang einer Schnittlinie (T) parallel zu der Erstreckung der Korde, um einen Streifenabschnitt (13) zu erhalten;
Aufwickeln des Streifenabschnitts (13) in Umfangsrichtung an einer Formungstrommel (D);
wobei der Schneidvorgang umfasst:
Positionieren des halbfertigen Produkts (12) unter zumindest einer Klinge (21);
Stützen des halbfertigen Produkts (12) durch einen Greifvorgang, der an einer oberen Oberfläche (12a) des halbfertigen Produkts (12) ausgeübt wird;
Verschieben der zumindest einen Klinge (21) entlang der Schnittlinie (T), durch das halbfertige Produkt (12), das durch den Greifvorgang gestützt wird, wobei das halbfertige Produkt (12) unter der zumindest einen Klinge (21) so positioniert ist, dass eine untere Oberfläche des halbfertigen Produkts (12) in einer anliegenden Beziehung gegen zumindest eine Gleitplatte (22) ist, die in einer Betriebsstellung angeordnet ist;
Bewegen der Gleitplatte (22) entlang der Schnittlinie (T) von dem halbfertigen Produkt (12) weg, nach der Aktivierung des Greifvorgangs und vor der Betätigung der zumindest einen Klinge (21), durch Verschieben der Gleitplatte (22) aus einer Betriebsstellung, in der sie koplanar mit der Vorschubebene (18) ist, in eine Ruhestellung, in der sie unter der Vorschubebene (18) angeordnet ist.

2. Verfahren nach dem vorhergehenden Anspruch, umfassend das Absenken der zumindest einen Klinge (21) durch das halbfertige Produkt (12) vor dem Verschieben der zumindest einen Klinge (21) entlang der Schnittlinie (T).

3. Verfahren nach dem vorhergehenden Anspruch, wobei das Wegbewegen der Gleitplatte (22) von dem halbfertigen Produkt (12) nach dem Absenken der zumindest einen Klinge (21) betätigt wird.

4. Verfahren nach einem oder mehreren der vorhergehenden Ansprüche, umfassend das Drehen der zumindest einen Klinge (21) um eine im Wesentlichen vertikale Achse, um die zumindest eine Klinge (21) parallel zu der Erstreckungsrichtung der Korde, die das halbfertige Produkt (12) bilden, anzuordnen.

5. Verfahren nach einem oder mehreren der vorhergehenden Ansprüche, wobei der Greifvorgang durch Erzielen einer Saugwirkung an dem halbfertigen Produkt (12) betätigt wird.

6. Verfahren nach dem vorhergehenden Anspruch, wobei die Saugwirkung durch Saugdüsen (26) ausgeübt wird, die entlang der Schnittlinie (T) verteilt sind; wobei zumindest ein Teil der Saugdüsen (26) unter Seitenrändern des halbfertigen Produkts (12) während des Haltens des halbfertigen Produkts (12) selektiv deaktiviert wird.

7. Vorrichtung zur Herstellung von Reifen für Fahrzeugräder, wobei die Vorrichtung umfasst:
Zuführeinrichtungen zum Anordnen eines halbfertigen Produkts (12) mit Korden, die parallel zueinander angeordnet sind, entlang einer Vorschubebene (18); zumindest eine Schneideinheit (17) zum Schneiden des halbfertigen Produkts (12), um einen Streifenabschnitt (13) zu erhalten;
eine Einheit zum Ablegen des Streifenabschnitts (13), die der Schneideinheit (17) nachgeschaltet ist, um den Streifenabschnitt (13) um eine Formungstrommel (D) aufzuwickeln,
wobei die Schneideinheit (17) umfasst:
zumindest eine Haltegruppe (19), die eine Greifwirkung nur auf eine obere Oberfläche (12a) des halbfertigen Produkts (12) ausübt, um das halbfertige Produkt (12) während des Schneidens des halbfertigen Produkts (12) zu stützen;
zumindest eine Klinge (21), die durch das halbfertige Produkt (12) wirkt und durch die Haltegruppe (19) getragen wird, entlang einer Schnittlinie (T) parallel zu der Erstreckung der Korde, wobei eine Gleitplatte (22) dazu geeignet ist, das halbfertige Produkt (12) in einer anliegenden Beziehung zu stützen, in einer Betriebsstellung vor der Betätigung der zumindest einen Klinge (21); wobei die Gleitplatte (22) zwischen einer Betriebsstellung, in der sie in Kontakt mit dem halbfertigen Produkt (12) steht und dieses stützt und in der sie eine Arbeitsoberfläche aufweist, die koplanar mit der Vorschubebene (18) ist, und einer Ruhestellung, in der sie von dem halbfertigen Produkt (12) weg unter die Vorschubebene (18) bewegt ist, beweglich ist; wobei die Gleitplatte (22) dazu ausgestaltet ist, nach der Aktivierung der Greifwirkung und vor der Betätigung der zumindest einen Klinge (21) entlang der Schnittlinie (T) in ihre Ruhestellung bewegt zu werden.

8. Vorrichtung nach dem vorhergehenden Anspruch, wobei die Schneideinheit (17) auch eine Stütz- und Bewegungsstruktur (24) für die zumindest eine Klinge (21) aufweist, die über der Vorschubebene (18) platziert ist; wobei die Bewegungsstruktur (24) zu der Vorschubebene (18) hin beweglich ist.

9. Vorrichtung nach einem oder mehreren der Ansprüche 7 bis 8, wobei die Gleitplatte (22) eine Ausnehmung (23) aufweist, die mit der zumindest einen Klinge (21) entlang einer Richtung senkrecht auf die Vorschubebene (18) beweglich ist.

10. Vorrichtung nach einem oder mehreren der Ansprüche 7 bis 9, wobei die zumindest eine Klinge (21) um eine Achse drehbar ist, die im Wesentlichen senkrecht auf die Vorschubebene (18) steht, um die zumindest eine Klinge (21) parallel zu den Korden anzuordnen, die das halbfertige Produkt (12) bilden.

11. Vorrichtung nach einem oder mehreren der Ansprüche 7 bis 10, wobei die Haltegruppe (19) Saugeinrichtungen umfasst.

12. Vorrichtung nach einem oder mehreren der Ansprüche 7 bis 11, wobei die Haltegruppe (19) Saugdüsen (26) umfasst, die entlang zumindest einer Richtung parallel zu und Seite an Seite mit der Schnittlinie (T) verteilt sind.

13. Vorrichtung nach Anspruch 7 oder 12, umfassend Deaktivierungseinrichtungen, die zumindest auf einen Teil der Saugdüsen (26) wirken, um eine Fluidverbindung zwischen den Düsen selbst und einer gemeinsamen Saugleitung zu unterbrechen.

14. Vorrichtung nach einem oder mehreren der Ansprüche 7 bis 13, wobei die zumindest eine Klinge (21) angetrieben durch ein Bewegungssystem (28) in einer Richtung parallel zu der Vorschubebene (18) zwischen einer Perforationsstellung, in der sie auf das halbfertige Produkt (12) trifft und dieses durchquert, und einer Schnittendstellung, in der sie sich horizontal von der Perforationsstellung beabstandet befindet, beweglich ist.

15. Vorrichtung nach einem oder mehreren der Ansprüche 7 bis 14, wobei ein Paar von Klingen (21), die gleichzeitig das halbfertige Produkt (12) perforieren, in einander entgegengesetzte Richtungen entlang der Schnittlinie (T) beweglich sind, um das halbfertige Produkt (12) aus einer zentralen Zone zu den Seitenrändern des halbfertigen Produkts (12) hin zu bewegen.

## Revendications

1. Procédé de fabrication de pneus pour roues de véhicule, comprenant le fait :
d'agencer au moins un produit semi-fini (12) comprenant des câblés parallèles les uns aux autres ;
de couper ledit produit semi-fini (12) le long d'une ligne de coupe (T) parallèle à l'extension des câblés afin d'obtenir une section de bande (13) ;
d'enrouler circonférentiellement la section de bande (13) sur un tambour de formation (D) ;
dans lequel l'action de coupe comprend le fait :
de positionner ledit produit semi-fini (12) en dessous d'au moins une lame (21) ;
de supporter le produit semi-fini (12) par une action de préhension appliquée sur une surface supérieure (12a) du produit semi-fini (12) ;
de translater l'au moins une lame (21) le long de la ligne de coupe (T), à travers le produit semi-fini (12) supporté par ladite action de préhension, où le produit semi-fini (12) est positionné en dessous de l'au moins une lame (21) avec une surface inférieure du produit semi-fini (12) en relation de butée sur au moins une plaque coulissante (22) agencée dans une position de fonctionnement ;
d'éloigner ladite plaque coulissante (22) du produit semi-fini (12), après l'activation de l'action de préhension et avant l'actionnement de ladite au moins une lame (21) le long de la ligne de coupe (T), par translation de la plaque coulissante (22) d'une position de fonctionnement dans laquelle elle est coplanaire avec le plan d'avancement (18) jusqu'à une position de repos dans laquelle elle est agencée en dessous du plan d'avancement (18) .

2. Procédé tel que revendiqué dans la revendication précédente, comprenant le fait d'abaisser l'au moins une lame (21) à travers ledit produit semi-fini (12) avant la translation de ladite au moins une lame (21) le long de la ligne de coupe (T).

3. Procédé tel que revendiqué dans la revendication précédente, dans lequel l'éloignement de la plaque coulissante (22) du produit semi-fini (12) est actionné après l'abaissement de ladite au moins une lame (21).

4. Procédé tel que revendiqué dans l'une ou plusieurs des revendications précédentes, comprenant la rotation de l'au moins une lame (21) autour d'un axe essentiellement vertical afin d'agencer ladite au moins une lame (21) parallèlement à la direction d'extension des câblés composant le produit semi-fini (12).

5. Procédé tel que revendiqué dans l'une ou plusieurs des revendications précédentes, dans lequel l'action de préhension est actionnée en réalisant une action d'aspiration sur ledit produit semi-fini (12).

6. Procédé tel que revendiqué dans la revendication précédente, dans lequel ladite action d'aspiration est exécutée par l'intermédiaire de buses d'aspiration (26) réparties le long de la ligne de coupe (T) ; où au moins une partie des buses d'aspiration (26) située au-delà des bords latéraux du produit semi-fini (12) étant sélectivement désactivée au cours de la retenue du produit semi-fini (12).

7. Appareil de fabrication de pneus pour roues de véhicule, comprenant :
des dispositifs d'alimentation pour agencer, le long d'un plan d'avancement (18), un produit semi-fini (12) comprenant des câbléss parallèles les uns aux autres ;
au moins une unité de coupe (17) pour couper ledit produit semi-fini (12), de manière à obtenir une section de bande (13) ;
une unité de dépôt de ladite section de bande (13), placée en aval de ladite unité de coupe (17) afin d'enrouler ladite section de bande (13) sur un tambour de formation (D),
dans lequel ladite unité de coupe (17) comprend :
au moins un groupe de retenue (19) qui exerce une action de préhension uniquement sur une surface supérieure (12a) du produit semi-fini (12) afin de supporter et de retenir ledit produit semi-fini (12) au cours de la coupe dudit semi-produit produit fini (12) ;
au moins une lame (21) active à travers ledit produit semi-fini (12), supportée par ledit groupe de retenue (19), le long d'une ligne de coupe (T) parallèle à l'extension des câblés, où une plaque coulissante (22) est adaptée pour supporter ledit produit semi-fini (12) en relation de butée, dans une position de fonctionnement avant l'actionnement de ladite au moins une lame (21) ; ladite plaque coulissante (22) étant mobile entre une position de fonctionnement, dans laquelle elle est en contact avec ledit produit semi-fini (12) et supporte celui-ci et dans laquelle elle présente une surface de travail coplanaire avec le plan d'avancement (18), et une position de repos, dans laquelle elle est éloignée dudit produit semi-fini (12) en dessous du plan d'avancement (18) ; ladite plaque coulissante (22) étant configurée pour être mobile vers sa position de repos après l'activation de l'action de préhension et avant l'actionnement de ladite au moins une lame (21) le long de la ligne de coupe (T).

8. Appareil tel que revendiqué dans la revendication précédente, dans lequel l'unité de coupe (17) comprend également une structure de support et de déplacement (24) pour ladite au moins une lame (21), placée au-dessus du plan d'avancement (18) ; ladite structure de déplacement (24) étant mobile vers le plan d'avancement (18).

9. Appareil tel que revendiqué dans l'une ou plusieurs des revendications 7 à 8, dans lequel ladite plaque coulissante (22) a un évidement (23) aligné avec ladite au moins une lame (21) le long d'une direction perpendiculaire au plan d'avancement (18).

10. Appareil tel que revendiqué dans l'une ou plusieurs des revendications 7 à 9, dans lequel l'au moins une lame (21) peut tourner autour d'un axe essentiellement perpendiculaire au plan d'avancement (18), afin d'agencer ladite au moins une lame (21) parallèlement aux câblés composant le produit semi-fini (12).

11. Appareil tel que revendiqué dans l'une ou plusieurs des revendications 7 à 10, dans lequel ledit groupe de retenue (19) comprend des dispositifs d'aspiration.

12. Appareil tel que revendiqué dans l'une ou plusieurs des revendications 7 à 11, dans lequel ledit groupe de retenue (19) comprend des buses d'aspiration (26) réparties le long d'au moins une direction, parallèlement et côte à côte par rapport à la ligne de coupe (T).

13. Appareil tel que revendiqué dans la revendication 7 ou 12, comprenant des dispositifs de désactivation actifs sur au moins une partie des buses d'aspiration (26) afin d'interrompre une communication fluidique entre les buses elles-mêmes et un conduit d'aspiration commun.

14. Appareil tel que revendiqué dans l'une ou plusieurs des revendications 7 à 13, dans lequel ladite au moins une lame (21) est mobile dans une direction parallèle au plan d'avancement (18), entraînée par un système de déplacement (28), entre un position de perforation dans laquelle elle frappe et traverse le produit semi-fini (12), et une position de fin de coupe dans laquelle elle est située horizontalement à l'écart de la position de perforation.

15. Appareil tel que revendiqué dans l'une ou plusieurs des revendications 7 à 14, dans lequel une paire de lames (21), perforant simultanément le produit semi-fini (12), est mobile le long de la ligne de coupe (T) dans des sens opposés les uns par rapport aux autres afin de couper le produit semi-fini (12) à partir d'une zone centrale vers les bords latéraux du produit semi-fini (12).
